# EUROPÄISCHE PATENTSCHRIFT

(11) **EP 1 170 317 B1**
(45) Veröffentlichungstag und Bekanntmachung des Hinweises auf die Patenterteilung: **04.08.2004**
(21) Anmeldenummer: 01810617.9
(22) Anmeldetag: 26.06.2001
(51) Int. Cl.: C08G 59/50

(54) **Härtbare Zusammensetzungen aus Glycidylverbindungen, aminischen Härtern und niedrigviskosen Härtungsbeschleunigern**
Curable compositions on the basis of glycidyl compounds, amine curing agents and low viscosity curing accelerators
Composition durcissable à base de composés glycidyles, durcisseurs aminiques et accélérateus à faible viscosité

(30) Priorität: 03.07.2000 DE 10032261
(43) Veröffentlichungstag der Anmeldung: 09.01.2002
(73) Patentinhaber: Vantico GmbH & Co. KG, 59192 Bergkamen (DE)
(72) Erfinder: Scherzer, Wolfgang, 59192 Bergkamen (DE); Volle, Jörg, 59379 Selm/Bork (DE)
(74) Vertreter: Dannappel, Hans-Jochen, Dr.

(56) Entgegenhaltungen:
- EP-A- 0 872 505
- DE-A- 19 850 817
- US-A- 4 195 152
- US-A- 4 757 144
- US-A- 4 980 412
- DATABASE WPI Section Ch, Week 197805 Derwent Publications Ltd., London, GB; Class A21, AN 1978-09729A XP002177922 & NL 7 607 553 A (BERTZ R T), 10. Januar 1978 (1978-01-10)

## Beschreibung

Die Erfindung betrifft härtbare Zusammensetzungen aus Glycidylverbindungen und aminischen Härtungsmitteln, welche als Härtungsbeschleuniger Dialkyldipropylentriamine und/oder deren Umsetzungsprodukte mit Formaldehyd und/oder phenolischen Verbindungen enthalten.

Härtbare Zusammensetzungen auf Basis von Glycidylverbindungen und aminischen Härtungsmitteln werden in der Industrie in weitem Umfang zur Beschichtung und Vergütung von metallischen und mineralischen Oberflächen verwendet.

Als Amine werden insbesondere aliphatische, cycloaliphatische, aromatische oder araliphatische Verbindungen sowie gegebenenfalls Imidazolingruppen enthaltende Polyaminoamide auf Basis von ein- oder mehrbasischen Säuren sowie deren Addukte mit Epoxidharzen eingesetzt.

Diese Verbindungen sind beschrieben in Lee & Neville, Handbook of Epoxy Resins, 1967, Chapter 6/1 to 10/19.

Die härtbaren Zusammensetzungen auf Basis von Epoxidharzen und diesen Aminverbindungen weisen in der Regel zwar eine ausreichend lange Topfzeit auf, jedoch ist ihre Härtungsgeschwindigkeit nach Auftrag auf die verschiedenen Substrate für viele Anwendungsgebiete zu gering.

Desweiteren ist die Viskosität vieler Verbindungen, insbesondere die der höheren Epoxidharzaddukte sowie der Polyaminoamide oder deren Addukte, verhältnismässig hoch, vor allem im Bereich niedriger Temperaturen unterhalb von 20°C.

Die Härtungsgeschwindigkeit kann durch Zusatz geeigneter Härtungsbeschleuniger beschleunigt werden.
Für diesen Zweck werden in den meisten Fällen Mannichbasen tertiärer Amine eingesetzt, wie z.B. Tris(dimethylaminomethyl)phenol (DMP30).

Diese Verbindungen haben jedoch den Nachteil, dass sie aufgrund der relativ hohen Viskosität, die sich wenig viskositätsreduzierend auf das Härtungsmittel auswirkt, in vielen Anwendungen nicht eingesetzt werden können.

Aufgabe der vorliegenden Erfindung war es daher, Härtungsbeschleuniger zur Verfügung zu stellen, welche durch eine geringe Eigenviskosität stark viskositätsreduzierend auf das Härtungsmittel und somit auf die härtbare Zusammensetzung wirken, wobei physikalische und mechanische Eigenschaften auf hohem Niveau bleiben sollen.

Überraschenderweise wurde gefunden, das für härtbare Zusammensetzungen auf Basis von Epoxidharzen und üblichen Aminhärtern, welche als Härtungsbeschleuniger Dialkyldipropylentriamine und/oder deren Umsetzungsprodukte mit Formaldehyd und/oder in Form von Mannichbasen enthalten, diese Aufgabe gelöst werden kann.

Gegenstand der Erfindung sind daher härtbare Zusammensetzungen enthaltend a) ein Epoxidharz, b) ein aminisches Härtungsmittel und c) einen Härtungsbeschleuniger,
dadurch gekennzeichnet, dass als Härtungsbeschleuniger c) mindestens eine oder mehr als eine Verbindung ausgewählt aus
c1) einer Verbindung der Formel (I) 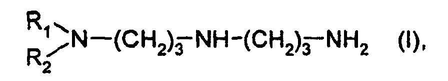 wobei R₁ und R₂ unabhängig voneinander einen Kohlenwasserstoffrest mit 1 bis 12 C-Atomen bedeuten,
c2) ein Umsetzungsprodukt einer Verbindung der Formel (I) mit Formaldehyd oder
c3) ein Umsetzungsprodukt einer Verbindung der Formel (I) mit Formaldehyd und einer phenolischen Verbindung,
in 0,1 bis 25 Gew.-%, bezogen auf die Summe der Komponenten a), b) und c), enthalten ist.

Die Verbindungen der Formel (1) werden üblicherweise durch Cyanethylierung von Dialkylaminopropylaminen im Molverhältnis Dialkylaminopropylamin zu Acrylnitril von 1 zu 1 und anschliessender Hydrierung nach an sich bekannten Verfahren hergestellt.

Vorzugsweise werden Amine eingesetzt, bei denen die Reste R₁ und R₂ unabhängig voneinander einen Kohlenwasserstoffrest mit 1 bis 8 C-Atomen bedeuten. Vorzugsweise werden dabei Amine eingesetzt, bei denen die Reste R₁ und R₂ unabhängig voneinander Methyl, Ethyl, Propyl, i-Propyl, Butyl oder i-Butyl bedeuten.

Die in den härtbaren Gemischen erfindungsgemäss mitverwendeten Umsetzungsprodukte von Formaldehyd mit Aminen der allgemeinen Formel (I) 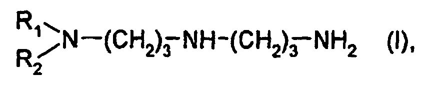 worin R₁ und R₂ die oben angegebene Bedeutung haben, ergeben heterocyclische Amine gemäss Formel (II). Vorzugsweise wird ein Molverhältnis von Formaldehyd zu Amin von 1 zu 1 bis 3 zu 2 verwendet.

Ein weiterer Gegenstand der Erfindung sind daher härtbare Zusammensetzungen enthaltend a) ein Epoxidharz, b) ein aminisches Härtungsmittel und c) einen Härtungsbeschleuniger, dadurch gekennzeichnet, dass als Härtungsbeschleuniger c2) eine Verbindung der Formel (II) 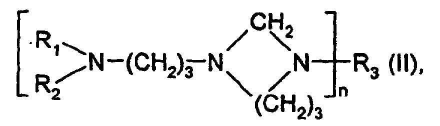 wobei R₁ und R₂ unabhängig voneinander einen Kohlenwasserstoffrest mit 1 bis 12 C-Atomen, R₃ ein Wasserstoffatom für n = 1 oder R₃ = Methylen für n = 2 bedeuten, erhältlich durch Umsetzung einer Verbindung der Formel (I) mit Formaldehyd in einem Molverhältnis von 1 zu 1 bis 2 zu 3, enthalten ist.

Zur Herstellung wird im allgemeinen das Amin vorgelegt und Formaldehyd, vorzugsweise Paraformaldehyd, portionsweise zugegeben. Die Reaktion verläuft exotherm. Die Zugabe des Formaldehyds wird daher so gesteuert, dass eine Reaktionstemperatur von ca. 100°C nicht überschritten wird. Erfindungsgemäss wird vorzugsweise zwischen ca. 30°C - 80°C gearbeitet. Das entstehende Reaktionswasser wird nach Zugabe der Gesamtmenge an Formaldehyd durch Erhöhung der Temperatur auf ca. 130°C und bei gegebenenfalls reduziertem Druck aus der Reaktionsmischung entfernt. Der verbliebene Rückstand kann ohne weitere Aufarbeitung als Härtungsbeschleuniger eingesetzt werden.
Die in den härtbaren Gemischen erfindungsgemäss mitverwendeten Umsetzungsprodukte von Formaldehyd und phenolischen Verbindungen mit Aminen der allgemeinen Formel (I) 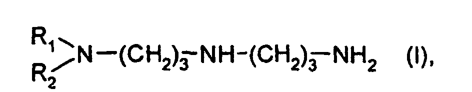 worin R₁ und R₂ die oben angegebene Bedeutung haben, sind sogenannte Mannichbasen.

Diese Mannichbasen sind nach an sich bekannten Verfahren erhältlich. Die molaren Verhältnisse hängen vom angestrebten Substitutionsgrad und der Funktionalität der phenolischen Komponente ab. So kann das Molverhältnis für Phenol zwischen 3 zu 1 und 1 zu 1 variiert werden, während der Substitutionsgrad für ortho-Kresol zwischen 2 zu 1 und 1 zu 1 liegt und z.B. für 4,4'-Dihydroxydiphenylmethan zwischen 4 zu 1 und 1 zu 1 liegt. Das Molverhältnis von Amin pro Hydroxylgruppe der phenolischen Verbindung ist vorzugsweise von 3 zu 1 bis 1 zu 1. Das Molverhältnis von Amin zu Formaldehyd liegt vorzugsweise von äquimolar bis zu einem geringfügigen molarem Überschuss an Formaldehyd.

Ein weiterer Gegenstand der Erfindung sind daher härtbare Zusammensetzungen enthaltend a) ein Epoxidharz, b) ein aminisches Härtungsmittel und c) einen Härtungsbeschleuniger, dadurch gekennzeichnet, dass als Härtungsbeschleuniger c3) eine Verbindung erhältlich durch Umsetzung einer Verbindung der Formel (I), Formaldehyd und einer phenolischen Verbindung, wobei das Molverhältnis von Amin pro Hydroxylgruppe der phenolischen Verbindung von 3 zu 1 bis 1 zu 1 und von Amin zu Formaldehyd von 1 zu 1 bis 1,0 zu 1,2 beträgt, enthalten ist.

Als Phenole können z.B. eingesetzt werden: Monophenole wie Phenol, ortho-, metha-, para-Kresol, die isomeren Xylenole, paratertiär-Butylphenol, para-Nonylphenol, Naphtol sowie Diund Polyphenole wie Resorcin, Hydrochinon, 4,4'-Dihydroxydiphenyl, 4,4'-Dihydroxydiphenylether, 4,4'-Dihydroxydiphenylsulfon, 4,4'-Dihydroxydiphenylmethan (Bisphenol F), Dihydroxydiphenylpropan (Bisphenol A). Bevorzugt sind Bisphenol A und Bisphenol F. Als Aldehydkomponente kann jede Verbindung verwendet werden, die unter den gegebenen Reaktionsbedingungen Formaldehyd abgibt, z.B. Trioxan oder Paraformaldehyd.

Die erfindungsgemässen Härtungsbeschleuniger c) werden in den härtbaren Zusammensetzungen in Mengen von 0,1 bis 25 Gew.-%, vorzugsweise von 1 bis 10 Gew.-%, bezogen auf die Summe der Komponenten a), b) und c) verwendet.

Die erfindungsgemäss mitverwendeten Epoxidverbindungen (a) sind handelsübliche Produkte mit mehr als einer Epoxidgruppe pro Molekül, die sich von ein- oder/und mehrwertigen, ein- oder/und mehrkernigen Phenolen, insbesondere Bisphenolen, sowie Novolaken ableiten. Eine umfangreiche Aufzählung dieser Di- oder Polyphenole findet sich in dem Handbuch "Epoxidverbindungen und Epoxidharze" von A.M. Paquin, Springer Verlag, Berlin, 1958, Kapitel IV, und Lee & Neville "Handbook of Epoxy Resins", 1967, Chapter 2.

Es können auch Mischungen von zwei oder mehreren der Epoxidharze verwendet werden. Bevorzugt werden Glycidylverbindungen auf Basis von Bisphenol A (4,4'-Dihydroxydiphenylpropan-2,2) und/oder Bisphenol F (4,4'-Dihydroxy-diphenylmethan) mit Epoxidwerten von 0,4 bis 0,62 eingesetzt.
Es können auch Mischungen der Epoxidharze mit sogenannten reaktiven Verdünnem, wie z.B. Monoglycidylethern von Phenolen oder mono- oder difunktionalen aliphatischen oder cycloaliphatischen Alkoholen, verwendet werden. Diese reaktiven Verdünner dienen in erster Linie zur Viskositätsreduzierung und sollten, da sie die Endeigenschaften des Duromeren ungünstig beeinflussen, nur in geringen Mengen mitverwendet werden.

Die beispielsweise genannten Epoxidharze können sowohl für die härtbaren Kombinationen als auch zur Herstellung der im erfindungsgemässen Verfahren ebenfalls einsetzbaren Härtungsmittel-Epoxid-Addukte verwendet werden.

Die erfindungsgemäss mitverwendeten aminischen Härtungsmittel (b) sind aliphatische, cycloaliphatische, araliphatische oder aromatische Amine, gegebenenfalls Imidazolingruppen enthaltende Aminoamide, die vorzugsweise mehr als zwei reaktive Aminwasserstoffatome pro Molekül enthalten, sowie deren Addukte mit Glycidylverbindungen. Diese Verbindungen gehören zum allgemeinen Stand der Technik und sind beschrieben beispielsweise in Lee & Neville, "Handbook of Epoxy Resins", Mc Graw Hill Book Company, 1967, Chapter 6-10.
Für die Beschichtung von metallischen oder mineralischen Untergründen werden vorzugsweise cycloaliphatische Amine oder Polyaminoamide auf Basis von ein- oder mehrwertigen Carbonsäuren und Polyalkylenpolyaminen sowie deren Addukte mit Glycidylverbinden eingesetzt.

Diese Härtungsmittel sind handelsübliche Produkte und werden beispielsweise von der Ciba GmbH unter dem Warenzeichen ARADUR® angeboten, insbesondere ARADUR (AD) 43, AD 46, AD 350.

Die Verbindungen der Formel (I) können aufgrund ihrer Anzahl an reaktiven Aminwasserstoffatomen auch als Härter für Epoxidharze verwendet werden. Härtungsmittel und Epoxidverbindungen werden in dem erfindungsgemässen Verfahren vorzugsweise in etwa äquivalenten Mengen, das heisst bezogen auf aktive Aminwasserstoffatome und reaktive Epoxidgruppen, eingesetzt. Es ist aber auch möglich, Härtungsmittel oder Glycidylkomponente im Über- bzw. Unterschuss zu verwenden. Die jeweiligen Mengen liegen im Bereich von ca. 10 - 200 Gew.-%, bezogen auf Glycidylverbindungen, und richten sich nach den gewünschten Endeigenschaften des Reaktionsproduktes. Übliche katalytische Härter für Epoxidharze können neben den erfindungsgemässen Härtungsbeschleunigern mitverwendet werden.

In der Regel wird man dabei so verfahren, dass man die erfindungsgemässen Härtungsbeschleuniger und die üblichen katalytischen oder reaktiven Härter in dem gewünschten Verhältnis getrennt oder als Mischung der Epoxidverbindung zusetzt.

Das Mischungsverhältnis von Glycidylverbindung zu den erfindungsgemäss verwendeten Härtungsbeschleunigern c) wird in Abhängigkeit der jeweils eingesetzten Verbindung und den gewünschten Endeigenschaften der gehärteten Endprodukte gesteuert.

Im allgemeinen wird bei Einsatz von flüssigen Glycidylethem auf Basis von Bisphenol A oder Bisphenol F mit Epoxidwerten zwischen ca. 0,40 bis ca. 0,62 eine Beschleunigermenge von 0,1 - 25 Gew.-%, bezogen auf die härtbare Mischung, eingesetzt; erfindungsgemäss bevorzugt ist eine Menge von ca. 1 - 10 Gew.-%.
Der besondere Vorteil der erfindungsgemässen härtbaren Zusammensetzungen liegt in ihrem ausgezeichneten Härtungsverhalten bei Temperaturen von 10°C - 25°C und hohen relativen Luftfeuchtigkeitswerten bis ca. 95 %.

Je nach Anwendungsgebiet und Verwendungszweck können in den erfindungsgemässen Zusammensetzungen aus Epoxidharz, Härtungsmittel und Beschleuniger, die für härtbare Epoxidharzzusammensetzungen gebräuchlichen Hilfs- und Zusatzstoffe in Form anorganischer und/oder organischer Zusätze wie feinteilige Sande, Talk, Kieselsäure, Tonerde, Metalle oder Metallverbindungen in Span- und Pulverform, thixotropierende Mittel, faserartige Stoffe wie z.B. Asbest und Glasstapelfasern, Pigmente, flammverzögernde Stoffe, Lösungsmittel, Farbstoffe, Weichmacher, Bitumen, Mineralöle, zugesetzt werden.

Die erfindungsgemässen härtbaren Zusammensetzungen können eingesetzt werden zur Beschichtung von saugenden oder nichtsaugenden Untergründen wie beispielsweise Natursteine, Marmor, Beton, Metalle, Glas, ferner als Kleb- und Dichtstoffe, sowie zur Herstellung von Formkörpern.

### Analysenmethoden

### Viskosität

Gemessen mit Haake Rotationsviskosimeter RV 20 nach Angaben des Herstellers.

### Farbzahl

Gemessen nach DIN 53 995 mit dem Farbmessgerät Lovibond (Hazen Farbzahl, APHA).

### Aminzahl

Gemessen nach DIN 16 945.

### Tecam-Wert

Wert für die Gelierungszeit, gemessen mit dem Tecam Gelation Timer GT3 der Firma Techne, Cambridge, GB, bei 23°C und 50 % relativer Luftfeuchtigkeit. Probenmischung aus Harz und Härter und Beschleuniger = 250 g.

### Härte nach Shore D

Gemessen mit dem Gerät Typ 38009 der Firma Karl Frank GmbH an Prüfkörpern von 30 mm Durchmesser und 6 mm Dicke nach 1, 2 und 3 Tagen.

### Beispiele

### Beschleuniger 1

158 g (1 mol) N,N-Dimethyldipropylentriamin (DMDPTA) werden im Reaktionsbehälter vorgelegt und auf etwa 30°C erwärmt. Unter starkem Rühren werden 30 g (1 mol) Paraformaldehyd in 3 Portionen von etwa 10 g so zugegeben, dass die Temperatur 80°C nicht überschreitet (exotherme Reaktion). Nun lässt man etwa 30 min nachreagieren bis ein klares, von Feststoffen freies Reaktionsprodukt vorliegt. Dann heizt man das Reaktionsprodukt auf. Ab etwa 102°C Sumpftemperatur beginnt die Destillation des freiwerdenden Wassers. Die Temperatur wird innerhalb von ca. 30 min bis 130°C erhöht. Bei 130°C lässt man 30 min nachrühren und vermindert danach den Druck auf 1 mbar, um das Produkt von Restwasser und restlichem freien DMDPTA zu befreien.

Das Gesamtdestillat beträgt etwa 19 g. Anschliessend bricht man das Vakuum mit Stickstoff und lässt das Reaktionsprodukt abkühlen. Analysenwerte des Produktes: Aminzahl: ca. 980 mg KOH/g; Viskosität/25°C: 7 mPa•s; Farbzahl: 30 (APHA).

### Beschleuniger 2

Gemäss Beispiel 1 werden umgesetzt: 158 g N,N-Dimethyldipropylentriamin und 45 g Paraformaldehyd. Analysenwerte des Produktes: Aminzahl: ca. 956 mg KOH/g; Viskosität/25°C: 56 mPa•s; Farbzahl: 35 (APHA).

### Beschleuniger 3

N,N-Dimethyldipropylentriamin

### Beschleuniger 4

158 g (1 Mol) N,N-Dimethyldipropylentriamin werden im Reaktionsgefäss vorgelegt und auf ca. 50°C erwärmt. 94 g Phenol (1 Mol) werden zugegeben und gelöst. Anschliessend werden 30 g Paraformaldehyd (1 Mol) bei 50°C bis max. 90°C portionsweise zugegeben und klar gelöst. Nun wird das Reaktionsprodukt aufgeheizt bis 150°C und dabei das entstehende Reaktionswasser abdestilliert. Das Destillat beträgt 18 g. Analysenwerte des Produktes: Aminzahl: ca. 640 mg KOH/g; Viskosität/25°C: 380 mPa•s; Farbzahl: 60 (APHA).

### Beschleuniger 5

Gemäss Beispiel 4 werden umgesetzt: 158 g N,N-Dimethyldipropylentriamin (1 Mol); 30 g Paraformaldehyd (1 Mol); 31,3 g Phenol (0,33 Mol). Analysenwerte des Produktes: Aminzahl: ca. 835 mg KOH/g; Viskosität/25°C: 25 mPa•s; Farbzahl: 50 (APHA).

### Beschleuniger 6 (Vergleichsbeispiel)

2,4,6-Tris(dimethylaminomethyl)-phenol (DMP 30).

Im Folgenden werden kommerzielle Produkte verwendet:
Als Härter: AD 43 =modifiziertes Addukt auf Basis cycloaliphatischer Amine und Glycidylether auf Basis von Bisphenol A mit einer AZ von ca. 270; AD 46 = modifiziertes Addukt auf Basis cycloaliphatischer und araliphatischer Amine und Glycidylether auf Basis von Bisphenol A mit einer Aminzahl (AZ) von ca. 325; AD 140 = Polyaminoimidazolin auf Basis dimerisierter Fettsäure mit einer AZ von ca. 400 und AD 350 = Polyaminoimidazolin mit einer AZ von ca. 390. Als Epoxidharze:
Araldit GY 240 = Diglycidylether auf Basis von Bisphenol A mit einem EP-Wert von ≈0,54;
Araldit GY 783 = modifiziertes Epoxidharz auf Basis von Bisphenol A und Bisphenol F und aliphatischem Verdünner mit EP-Wert von 0,520.

Die Zusammensetzungen von 28 Beispielen werden in der Tabelle 1 aufgelistet. Die mit diesen Zusammensetzungen erhaltenen Versuchsergebnisse sind in der Tabelle 2 aufgelistet.

Die geringe Eigenviskosität der erfindungsgemässen Verbindungen und daher stark viskositätsreduzierenden Eigenschaften in Kombination mit gebräuchlichen aminischen Härtungsmitteln sind Gegenstand der Beispiele 29 bis 36 und Tabelle 3.

**Tabelle 1**

| Beispiel | Beschleuniger (g) | Härter (g) | Harz (g) |
|---|---|---|---|
| 1 | - (-) | AD 46 (50) | GY 783 (100) |
| 2 | 1 (5) | " | " |
| 3 | 2 (5) | " | " |
| 4 | 3 (5) | " | " |
| 5 | 3 (3) | " | " |
| 6 | 3 (10) | " | " |
| 7 | 6 (5) | " | " |
| 8 | - (-) | AD 43 (60) | GY 783 (100) |
| 9 | 1 (5) | " | " |
| 10 | 2 (5) | " | " |
| 11 | 3 (5) | " | " |
| 12 | 6 (5) | " | " |
| 13 | - (-) | AD 350 (50) | GY 240 (100) |
| 14 | 1 (5) | " | " |
| 15 | 2 (5) | " | " |
| 16 | 3 (5) | " | " |
| 17 | 6 (5) | " | " |
| 18 | - (-) | AD 140 (50) | GY 240 (100) |
| 19 | 1 (5) | " | " |
| 20 | 2 (5) | " | " |
| 21 | 3 (5) | " | " |
| 22 | 1 (3) | " | " |
| 23 | 1 (10) | " | " |
| 24 | 6 (5) | " | " |
| 25 | 4 (5) | AD 350 (50) | " |
| 26 | 5 (5) | " | " |
| 27 | 4 (5) | " | GY 783 (100) |
| 28 | 5 (5) | " | " |

**Tabelle 2:**

| Beispiel | Härtungstemp. [°C] | Härte Shore D nach Tagen | | | Gelzeit bei 25°C [min] | Ansatz [g] |
|---|---|---|---|---|---|---|
| | | 1d | 2d | 3d | | |
| 1 | 10 | 49 | 69 | 72 | 63 | 150 |
| 2 | " | 62 | 74 | 76 | 57 | 150 |
| 3 | " | 56 | 73 | 76 | 65 | 150 |
| 4 | " | 67 | 75 | 78 | 55 | 150 |
| 5 | " | 58 | 74 | 75 | 60 | 150 |
| 6 | " | 70 | 75 | 78 | 40 | 150 |
| 7 | " | 67 | 75 | 78 | 50 | 150 |
| 8 | " | 14 | 54 | 66 | 73 | 150 |
| 9 | " | 41 | 68 | 74 | 53 | 150 |
| 10 | " | 33 | 67 | 73 | 65 | 150 |
| 11 | " | 54 | 71 | 74 | 52 | 150 |
| 12 | " | 56 | 71 | 74 | 48 | 150 |
| 13 | 25 | 26 | 68 | 75 | 158 | 150 |
| 14 | " | 71 | 75 | 77 | 130 | 150 |
| 15 | " | 63 | 75 | 78 | 139 | 150 |
| 16 | " | 70 | 75 | 77 | 115 | 150 |
| 17 | " | 71 | 75 | 78 | 131 | 150 |
| 18 | " | 58 | 65 | 65 | 152 | 250 |
| 19 | " | 65 | 70 | 70 | 95 | 250 |
| 20 | " | 72 | 75 | 75 | 123 | 250 |
| 21 | " | 70 | 71 | 74 | 85 | 250 |
| 22 | " | 65 | 70 | 70 | 120 | 250 |
| 23 | " | 70 | 72 | 75 | 70 | 250 |
| 24 | " | 71 | 71 | 72 | 100 | 250 |
| 25 | " | 69 | 78 | 80 | 250 | 100 |
| 26 | " | 68 | 77 | 80 | 270 | 100 |
| 27 | " | 15 | 57 | 68 | 440 | 100 |
| 28 | " | 17 | 58 | 74 | 440 | 100 |

**Tabelle 3**

| | Produkt | Viskosität bei 25°C in m.Pa.s |
|---|---|---|
| Beispiel 29 | Aradur 140 | |
| | ohne Beschleuniger | 15 800 |
| Beispiel 30 | Aradur 140 (100 g) | |
| | + Beschleuniger 1 (5 g) | 8 400 |
| Beispiel 31 | Aradur 140 (100 g) | |
| | + Beschleuniger 2 (5 g) | 12 000 |
| Beispiel 32 | Aradur 140 (100 g) | |
| | + Beschleuniger 3 (5 g) | 8 700 |
| Beispiel 33 | Aradur 140 (100 g) | |
| | + Beschleuniger 3 (10 g) | 5 050 |
| Beispiel 34 | Aradur 140 (100 g) | |
| | + Beschleuniger 4 (5 g) | 12 500 |
| Beispiel 35 | Aradur 140 (100 g) | |
| | + Beschleuniger 5 (10 g) | 8 500 |
| Beispiel 36 | Aradur 140 (100 g) | |
| | + Beschleuniger 6 (5 g) | 14 100 |

Wie aus der Tabelle 3 zu entnehmen ist, ist die Viskosität des mit dem im Vergleichsbeispiel 6 gemäss Stand der Technik beschleunigten Härter Aradur 140 deutlich höher als die Viskositäten des mit den erfindungsgemässen Verbindungen beschleunigten Härter Aradur 140. Aus der Tabelle 2 geht zudem hervor, dass überraschenderweise die mit den erfindungsgemässen Verbindungen beschleunigten Härtern (insbesondere Beschleuniger 1 und 2) bei vergleichbarer Härtungsgeschwindigkeit (gemessen nach Shore D) deutlich längere Gelzeiten aufweisen. Dies ist in der Praxis ein grosser Vorteil, da die Verarbeitungszeit deutlich länger ist, während die Härtungsgeschwindigkeit praktisch unverändert bleibt.

## Patentansprüche

1. Härtbare Zusammensetzung enthaltend a) ein Epoxidharz, b) ein aminisches Härtungsmittel und c) einen Härtungsbeschleuniger,
**dadurch gekennzeichnet, dass** als Härtungsbeschleuniger c) mindestens eine oder mehr als eine Verbindung ausgewählt aus
c1) einer Verbindung der Formel (I) 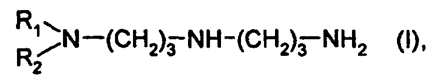 wobei R₁ und R₂ unabhängig voneinander einen Kohlenwasserstoffrest mit 1 bis 12 C-Atomen bedeuten,
c2) ein Umsetzungsprodukt einer Verbindung der Formel (I) mit Formaldehyd oder
c3) ein Umsetzungsprodukt einer Verbindung der Formel (I) mit Formaldehyd und einer phenolischen Verbindung,
in 0,1 bis 25 Gew.-%, bezogen auf die Summe der Komponenten a), b) und c), enthalten ist.

2. Härtbare Zusammensetzung gemäss Anspruch 1, **dadurch gekennzeichnet, dass** als Härtungsbeschleuniger c2) eine Verbindung der Formel (II) 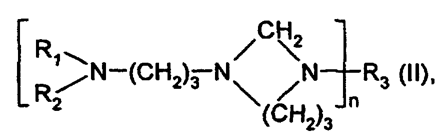 wobei R₁ und R₂ unabhängig voneinander einen Kohlenwasserstoffrest mit 1 bis 12 C-Atomen, R₃ ein Wasserstoffatom für n = 1 oder R₃ = Methylen für n = 2 bedeuten, erhältlich durch Umsetzung einer Verbindung der Formel (I) mit Formaldehyd in einem Molverhältnis von 1 zu 1 bis 2 zu 3, enthalten ist.

3. Härtbare Zusammensetzung gemäss Anspruch 1, **dadurch gekennzeichnet, dass** als Härtungsbeschleuniger c3) eine Verbindung erhältlich durch Umsetzung einer Verbindung der Formel (I), Formaldehyd und einer phenolischen Verbindung, wobei das Molverhältnis von Amin pro Hydroxylgruppe der phenolischen Verbindung von 3 zu 1 bis 1 zu 1 und von Amin zu Formaldehyd von 1 zu 1 bis 1 zu 1,2 beträgt, enthalten ist.

4. Härtbare Zusammensetzung gemäss einem der Ansprüche 1 bis 3, **dadurch gekennzeichnet, dass** R₁ und R₂ unabhängig voneinander einen Kohlenwasserstoffrest mit 1 bis 8 C-Atomen bedeuten.

5. Härtbare Zusammensetzung gemäss Anspruch 4, **dadurch gekennzeichnet, dass** R₁ und R₂ unabhängig voneinander Methyl, Ethyl, Propyl, i-Propyl, Butyl oder i-Butyl bedeuten.

6. Härtbare Zusammensetzung gemäss einem der Ansprüchen 1 bis 5, **dadurch gekennzeichnet, dass** Komponente a) eine Epoxidverbindung mit im Durchschnitt mehr als einer Epoxidgruppe im Molekül ist.

7. Härtbare Zusammensetzung gemäss einem der Ansprüche 1 bis 6, **dadurch gekennzeichnet, dass** als Komponente b) ein aminisches Härtungsmittel mit durchschnittlich mehr als zwei reaktiven Aminwasserstoffatomen pro Molekül enthalten ist.

8. Härtbare Zusammensetzung gemäss einem der Ansprüche 1 bis 7, dadurch gekenzeichnet, das Modifizierungsmittel, wie Verdünnungsmittel, und/oder weitere für härtbare Epoxidharzzusammensetzungen gebräuchliche Hilfs- und Zusatzstoffe enthalten sind.

9. Verfahren zur Herstellung gehärteter Produkte, **dadurch gekennzeichnet, dass** zur Härtung eine Zusammensetzung gemäss einem der Ansprüche 1 bis 8 verwendet wird.

10. Verwendung einer Verbindung der Formel (I) 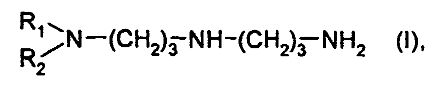 wobei R₁ und R₂ unabhängig voneinander einen Kohlenwasserstoffrest mit 1 bis 12 C-Atomen bedeuten, als Härter für Epoxidharze.

## Revendications

1. Composition durcissable contenant a) une résine époxyde, b) un durcisseur aminé et c) un accélérateur de durcissement, **caractérisée en ce qu'**elle contient comme accélérateurs de durcissement c) au moins un ou plus d'un composé choisis parmi
c1) un composé de formule (I) 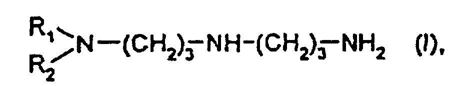 dans laquelle R₁ et R₂ représentent indépendamment l'un de l'autre un groupe hydrocarboné ayant de 1 à 12 atomes de carbone,
c2) un produit de réaction d'un composé de formule (I) avec le formaldéhyde ou
c3) un produit de réaction d'un composé de formule (I) avec le formaldéhyde et un composé phénolique,
en quantité de 0,1 à 25 % en poids, par rapport à la somme des composants a), b) et c).

2. Composition durcissable selon la revendication 1, **caractérisée en ce qu'**elle contient comme accélérateur de durcissement c2) un composé de formule (II) 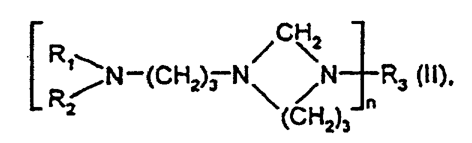 dans laquelle R₁ et R₂ représentent indépendamment l'un de l'autre un groupe hydrocarboné ayant de 1 à 12 atomes de carbone, R₃ un atome d'hydrogène pour n = 1 ou R₃ = méthylène pour n = 2, pouvant être obtenu par réaction d'un composé de formule (I) avec le formaldéhyde dans un rapport molaire de 1 sur 1 jusqu'à 2 sur 3.

3. Composition durcissable selon la revendication 1, **caractérisée en ce qu'**elle contient comme accélérateur de durcissement c3) un composé pouvant être obtenu par réaction d'un composé de formule (I), de formaldéhyde et d'un composé phénolique, le rapport molaire d'amine par groupe hydroxyle du composé phénolique étant de 3 à 1 jusqu'à 1 à 1 et d'amine sur formaldéhyde de 1 sur 1 jusqu'à 1 sur 1,2.

4. Composition durcissable selon l'une des revendications 1 à 3, **caractérisée en ce que** R₁ et R₂ représentent indépendamment l'un de l'autre un groupe hydrocarboné ayant de 1 à 8 atomes de carbone.

5. Composition durcissable selon la revendication 4, **caractérisée en ce que** R₁ et R₂ représentent indépendamment l'un de l'autre un méthyle, éthyle, propyle, i-propyle, butyle ou i-butyle.

6. Composition durcissable selon l'une des revendications 1 à 5, **caractérisée en ce que** le composant a) est un composé époxyde avec en moyenne plus d'un groupe époxyde dans la molécule.

7. Composition durcissable selon l'une des revendications 1 à 6, **caractérisée en ce qu'**elle contient comme composant b) un durcisseur aminé avec en moyenne plus de deux atomes d'hydrogène amine réactifs par molécule.

8. Composition durcissable selon l'une des revendications 1 à 7, **caractérisée en ce qu'**elle contient des agents modifiants, comme des agents de dilution et/ou d'autres adjuvants et additifs utilisables pour les compositions de résines époxyde durcissables.

9. Procédé de préparation de produits durcis, **caractérisé en ce que** l'on utilise pour le durcissement une composition selon l'une des revendications 1 à 8.

10. Utilisation d'un composé de formule (I) 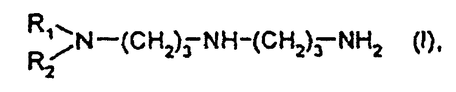 dans laquelle R₁ et R₂ représentent indépendamment l'un de l'autre un groupe hydrocarboné ayant de 1 à 12 atomes de carbone, comme durcisseur pour des résines époxyde.

## Claims

1. A curable composition comprising a) an epoxy resin, b) an aminic curing agent and c) a curing accelerator,
which comprises as curing accelerator c) at least one or more than one compound selected from
c1) a compound of formula (I) 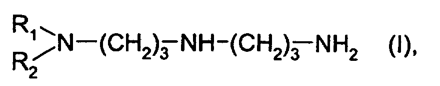 wherein R₁ and R₂ are each independently of the other a hydrocarbon radical having from 1 to 12 carbon atoms,
c2) a reaction product of a compound of formula (I) with formaldehyde, and
c3) a reaction product of a compound of formula (I) with formaldehyde and a phenolic compound,
in an amount of from 0.1 to 25 % by weight, based on the sum of components a), b) and c).

2. A curable composition according to claim 1, which comprises as curing accelerator c2) a compound of formula (II) 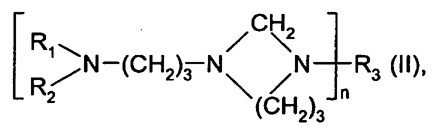 wherein R₁ and R₂ are are each independently of the other a hydrocarbon radical having from 1 to 12 carbon atoms, R₃ is a hydrogen atom when n = 1 or R₃ is methylene when n = 2, obtainable by reaction of a compound of formula (I) with formaldehyde in a molar ratio of from 1 : 1 to 2 : 3.

3. A curable composition according to claim 1, which comprises as curing accelerator c3) a compound obtainable by reaction of a compound of formula (I), formaldehyde and a phenolic compound, the molar ratio of amine per hydroxyl group of the phenolic compound being from 3 : 1 to 1 : 1 and of amine to formaldehyde being from 1 : 1 to 1 : 1.2.

4. A curable composition according to any one of claims 1 to 3, wherein R₁ and R₂ are each independently of the other a hydrocarbon radical having from 1 to 8 carbon atoms.

5. A curable composition according to claim 4, wherein R₁ and R₂ are each independently of the other methyl, ethyl, propyl, isopropyl, butyl or isobutyl.

6. A curable composition according to any one of claims 1 to 5, wherein component a) is an epoxy compound having on average more than one epoxy group in the molecule.

7. A curable composition according to any one of claims 1 to 6, which comprises as component b) an aminic curing agent having on average more than two reactive amine hydrogen atoms per molecule.

8. A curable composition according to any one of claims 1 to 7, which comprises modifying agents, such as diluents, and/or further auxiliaries and additives customarily used for curable epoxy resin compositions.

9. A process for the production of cured products, wherein a composition according to any one of claims 1 to 8 is used for curing.

10. The use of a compound of formula (I) 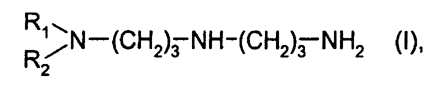 wherein R₁ and R₂ are each independently of the other a hydrocarbon radical having from 1 to 12 carbon atoms, as hardener for epoxy resins.
